# EUROPEAN PATENT APPLICATION

(11) **EP 4 545 278 A1**
(43) Date of publication of application: **30.04.2025**
(21) Application number: 24209303.7
(22) Date of filing: 28.10.2024
(51) Int. Cl.: B29C 64/40, B22F 10/368, B22F 10/38, B22F 10/47, B33Y 10/00, B33Y 40/00, B33Y 80/00, B22F 10/80, B33Y 50/00, B29C 64/153, B29C 64/386, B22F 10/28, G01N 1/28

(54) **METHOD FOR ADDITIVELY MANUFACTURED PROCESS-EQUIVALENT TEST SPECIMENS**

(30) Priority: 26.10.2023 US 202318494854
(71) Applicant: RTX Corporation, Farmington, CT 06032 (US)
(72) Inventor: ANAHID, Masoud, Farmington, 06032 (US); FURRER, David U., Farmington, 06032 (US); BURLATSKY, Sergei F., Farmington, 06032 (US); PILCHAK, Adam, Farmington, 06032 (US)
(74) Representative: Dehns

(57) **Abstract**

A method (34) includes identifying at least one region-of-interest (ROI) of an article (36) that is to be additively manufactured by powder bed fusion, determining a thermal profile of the ROI, where the thermal profile includes at least a maximum temperature and a cooling rate, determining a geometry of an insulation layer (32; 132; 232) upon which at least one process-equivalent test specimen (PETS) (22) is to be additively manufactured by powder bed fusion such that a thermal profile of the at least one PETS (22) replicates the thermal profile of the at least one ROI, and fabricating the at least one PETS (22) in accordance with the thermal profile of the PETS (22) by using the determined geometry of the insulation layer (32; 132; 232) such that the at least one PETS (22) and the at least one ROI are metallurgically equivalent.

## Description

### BACKGROUND

Powder bed fusion additive manufacturing processes can be used to fabricate metallic articles, such as gas turbine engine components. There is, however, only a limited understanding of the variations in material properties that occur across components made by these processes. In particular, component regions such as overhangs, thin-wall features, holes, corners, and edges are often subjected to different processing temperatures than adjacent regions, which can result in wide differences in material properties from one region to another. Process sensors and additive manufacturing modeling tools have the potential to provide insight into how processing temperatures vary based on component geometry, but such tools are still under development and are currently unable to improve the fidelity of material property data for localized characterization of material properties. As a result, rather than a model-based approach, material properties of components have instead been evaluated using test specimens that are fabricated using nominal processing parameters purported to provide an average representation of the material properties of the component as a whole. This test specimen approach, however, is unable to replicate material properties of localized target regions of a component that are of particular interest for part qualification standards.

### SUMMARY

A method according to an example of the present invention includes identifying at least one region-of-interest (ROI) of an article that is to be additively manufactured by powder bed fusion, determining a thermal profile of the at least one ROI, where the thermal profile includes at least a maximum temperature and a cooling rate, determining a geometry of an insulation layer upon which at least one process-equivalent test specimen (PETS) is to be additively manufactured by powder bed fusion such that a thermal profile of the at least one PETS replicates the thermal profile of the at least one ROI, and fabricating the at least one PETS in accordance with the thermal profile of the at least one PETS by using the determined geometry of the insulation layer such that the at least one PETS and the at least one ROI are metallurgically equivalent.

In an example of the foregoing embodiment, the geometry of the insulation layer includes vertical columns.

In a further example of any of the foregoing embodiments, the vertical columns are of uniform cross-section.

In a further example of any of the foregoing embodiments, the vertical columns taper in cross-section.

In a further example of any of the foregoing embodiments, the vertical columns each have a thickness, a width, and a height such that the height is greater than the thickness and greater than the width.

In a further example of any of the foregoing embodiments, the insulation layer is a layer of unfused powder particles.

In a further example of any of the foregoing embodiments, the determining of the geometry includes simulating a build process of the at least one PETS and adjusting the geometry of the insulation layer such that the thermal profile of the at least one PETS replicates the thermal profile of the at least one ROI.

A further example of any of the foregoing embodiments further includes determining a thermal input such that the thermal profile of the at least one PETS replicates the thermal profile of the at least one ROI, the thermal input selected from the group consisting of a build orientation, a laser power, a scan speed, residence time, and combinations thereof, and fabricating the PETS in accordance with the thermal input.

A further example of any of the foregoing embodiments further includes determining a geometry of the at least one PETS such that the thermal profile of the at least one PETS replicates the thermal profile of the at least one ROI.

In a further example of any of the foregoing embodiments, the at least one ROI includes first and second ROIs, the at least one PETS includes first and second PETS corresponding, respectively, to the first and second ROls, and the thermal profile of the first ROI differs from the thermal profile of the second ROI such that the geometry of the insulation layer of the first PETS is different than the geometry of the insulation layer of the second PETS.

In a further example of any of the foregoing embodiments, the at least one ROI is selected from the group consisting of an overhang, an edge, and a bridge.

An example additive manufacturing build of a process-equivalent test specimen according to the present invention includes an additively manufactured process-equivalent test specimen (PETS) on a reference plane, a build plate vertically spaced from the reference plane, and an insulation layer on the build plate supporting the reference plane and the PETS, the insulation layer having a geometry such that a thermal profile of the PETS replicates a thermal profile of a region of interest of an article associated with the PETS.

In an example of the foregoing embodiment, the geometry of the insulation layer includes vertical columns extending from the build plate to the reference plane.

In a further example of any of the foregoing embodiments, the vertical columns are of uniform cross-section.

In a further example of any of the foregoing embodiments, the vertical columns taper in cross-section.

In a further example of any of the foregoing embodiments, the vertical columns each have a thickness, a width, and a height such that the height is greater than the thickness and greater than the width.

In a further example of any of the foregoing embodiments, the insulation layer is a layer of unfused powder particles.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an additive manufacturing build of a process-equivalent test specimen with one example configuration of an insulation layer having vertical columns.
Figure 2 illustrates a flow diagram for a model-based approach to design a process-equivalent test specimen.
Figure 3 illustrates example regions in an additively manufactured article.
Figure 4 illustrates an additive manufacturing build of a process-equivalent test specimen with another example configuration of an insulation layer having tapered columns.
Figure 5 illustrates an additive manufacturing build of a process-equivalent test specimen with another example configuration of an insulation layer having a layer of unfused powder particles.

In this disclosure, like reference numerals designate like elements where appropriate and reference numerals with the addition of one-hundred or multiples thereof designate modified elements that are understood to incorporate the same features and benefits of the corresponding elements. Terms such as "first" and "second" used herein are to differentiate that there are two architecturally distinct components or features. Furthermore, the terms "first" and "second" are interchangeable in that a first component or feature could alternatively be termed as the second component or feature, and vice versa.

### DETAILED DESCRIPTION

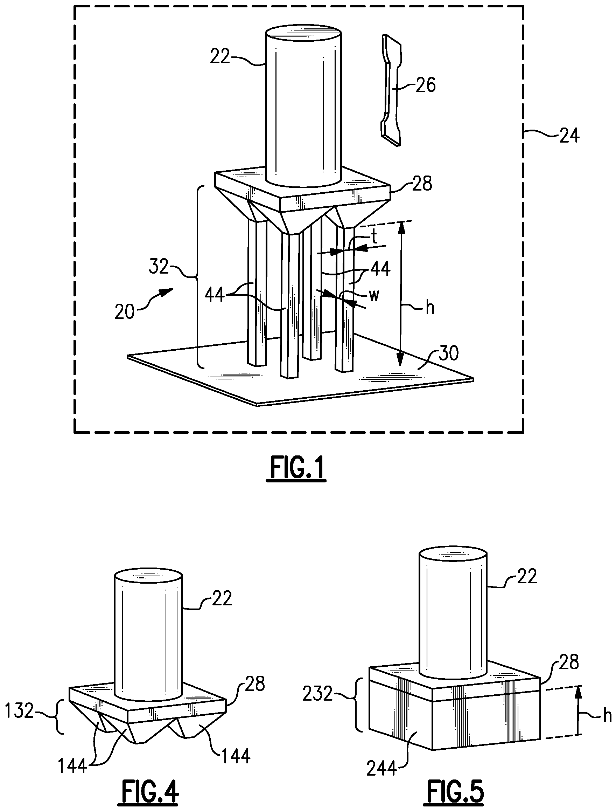

Figure 1 illustrates an additive manufacturing build 20 of a process-equivalent test specimen 22 ("PETS") in an additive manufacturing machine 24. A PETS is an additively manufactured body that is produced under thermal processing conditions that closely replicate thermal processing conditions of a localized region of an article that is, or is to be, additively manufactured such that the PETS and the localized region are metallurgically equivalent. As an example, equivalent thermal profiles have maximum temperatures that differ by 10% or less and cooling rates that differ by 10% or less. The term "metallurgically equivalent" refers to an additively manufactured PETS that has material properties that are substantially equivalent to the material properties of the localized region. Material properties can include one or more of yield strength, tensile strength, ductility, toughness, hardness, fatigue life, microstructure, porosity, metallurgical inclusions, and crystalline orientation.

The PETS 22 in the illustrated example is a cylinder from which a test piece 26 is taken, such as by cutting and/or machining. As will be appreciated, the geometry of the PETS 22 could be varied, depending on the geometry of the localized region of the article that it represents, but in all instances the geometry of the PETS 22 will differ from that of the corresponding article that it is the processing equivalent of.

The PETS 22 is built on a reference plane 28, which in this example is in the form of a solid, powder-fused plate. The reference plane 28 is vertically spaced from a build plate 30, which is in a powder bed of the machine 24. The machine 24 is generally known and may include components such as, but not limited to, the powder bed, an energy beam source, powder-handling equipment, an environmentally-controlled chamber, electronic controls, and a user display. There is an insulation layer 32 on the build plate 30 that supports the reference plane 28 and the PETS 22 above the build plate 30. As will be discussed in more detail below, the insulation layer 32 has a geometry such that a thermal profile of the PETS 22 replicates a thermal profile of a region of interest of an article associated with the PETS 22. The article is not particularly limited, and in non-limiting examples is a gas turbine engine component, an airfoil, a heat exchanger, or virtually any article that has a complex geometry including an overhang, a thin-wall, a hole, a corner, or an edge at a localized region that is of particular interest for part qualification standards. Such a localized region is referred to herein as a region-of-interest ("ROI").

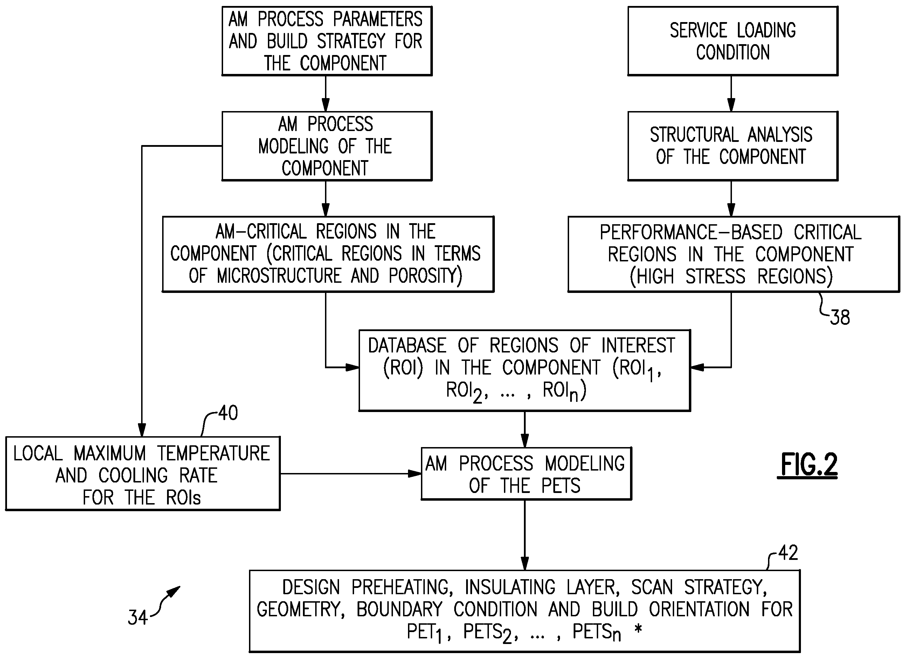

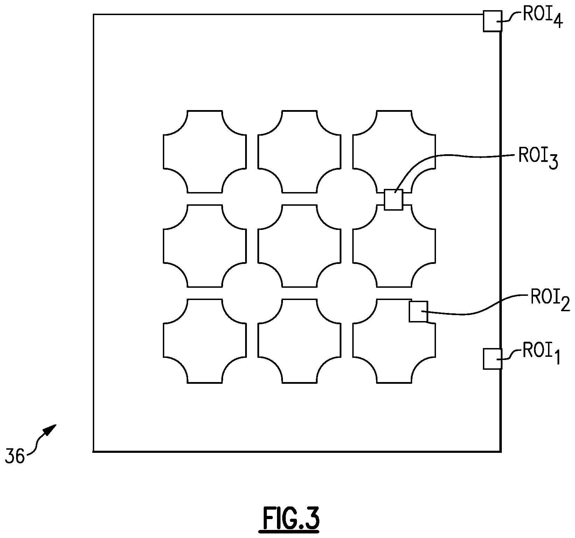

While PETS and powder bed verification have generally been subject to past analysis, such analysis has not taught a model-based approach to achieve thermal processing conditions in a PETS that closely replicate thermal processing conditions of a localized region of an article. In this regard, Figure 2 shows an example process diagram of a method 34 for producing the PETS 22 with such thermal processing conditions. Reference may also be made to Figure 3, which illustrates an example of a representative portion of an article 36 that is to be produced by additive manufacturing.

In general, the method 34 initially involves identifying which regions of the article 36 are of interest to replicate the material properties of in a PETS 22. For example, at 38 one or more ROIs are identified based upon performance criteria of the article 36. The ROIs can include high stress regions, high fatigue regions, or other regions that are subject to conditions that are important to the performance of the article 36. For example, the ROls are determined based on service loading conditions, structural analysis (derived from simulations and/or empirical data of the article 34 or a similar article), additive manufacturing process parameters for the article 36, process modeling of the article 36, and regions that are of interest due to the expected microstructure or porosity. As an example, ROI1, ROI2, ROI3, and ROI4 are identified in the article 36, which correspond, respectively, to an edge, an overhang, a thin wall bridge, and a corner.

After identification of the one or more ROIs, at 40 a thermal profile is determined for each ROI. For instance, a thermal profile includes at least a maximum temperature and a cooling rate. The thermal profile is determined based on computerized modeling simulations of an additive manufacturing build of the article 34 and/or empirical data of an additive manufacturing build of the article 34. All such thermal profile and performance information about the ROIs may be stored in a database and subsequently used for computerized modeling of the additive manufacturing process of the PETS 22.

At 42 the geometry of the insulation layer 32 is determined such that the resultant thermal profile of the PETS 22 replicates the thermal profile of the ROI that the PETS is to replicate. For example, the geometry of the insulation layer 32 determines the temperature build-up at the PETS 22 and is thus linked to the maximum temperature and cooling rate at the PETS 22. That is, the insulation layer 32 limits heat dissipation from the PETS 22 and, in that regard, the geometry of the insulation layer 32 is modeled to produce a thermal profile for the PETS 22 that replicates the thermal profile determined at 40 for the ROI. For instance, in the illustrated example of Figure 1, the geometry of the insulation layer 32 includes vertical columns 44 (i.e., solid columns of fused powder) that connect the build plate 30 (which acts as a heat sink) to the reference plane 28. The vertical columns 44 influence thermal exchange between the build plate 30 and the reference plane 28/PETS 22. In the illustrated example, the vertical columns 44 are of uniform cross-section along their vertical heights. Additionally, the vertical columns 44 each have a thickness (t), a width (w), and a height (h), and the height is greater than the thickness and greater than the width. Such a height provides a relatively high insulation layer and can be adjusted in the modeling to facilitate control of the thermal profile of the PETS 22. For instance, a greater height provides a greater temperature build-up and thus contributes to a greater maximum temperature and lower cooling rate, while a lower height provides less temperature build-up and thus contributes to a lower maximum temperature and greater cooling rate. Similarly, the thickness and width can be adjusted to either add mass (greater temperature build-up) or reduce mass (lower temperature build-up) in the insulation layer 32.

In another example in Figure 4, the insulation layer 132 includes columns 144 that are shorter and that taper in cross-section to become narrower along the vertical direction moving away from the reference plane 28. In the prior example in Figure 1 these tapered sections serve as bases of the columns 44 at the reference plane 28. Similar to adjustment of the geometry of the columns 44, the taper of columns 144 can be adjusted to either increase or decrease temperature build-up and cooling rate.

In another example shown in Figure 5, rather than columns, the insulation layer 232 is a layer 244 of unfused powder particles. The height (h) of the layer 244 and the packing density of the layer 244 can be adjusted (e.g., by roller pressure) in order to either increase or decrease temperature build-up and cooling rate. For instance, a greater height and lower packing density provides greater temperature build-up and thus contributes to a greater maximum temperature and lower cooling rate, while a lower height and greater packing density provides lower temperature build-up and thus contributes to a lower maximum temperature and higher cooling rate.

The build process of the PETS 22 is simulated iteratively based on variations in the geometry of the insulation layer 32/132/232 according to the examples above such that the thermal profile of the PETS 22 is determined that replicates the thermal profile of the ROI. In further examples, such simulations also include determination of one or more thermal inputs that facilitate adjustment of the thermal profile of the PETS 22 to replicate the thermal profile of the ROI. For example, the thermal input is one or more of a build orientation of the PETS 22, a laser power, hatching path, a scan speed, or a residence time.

Once the thermal profile of the PETS 22 for each ROI is determined, the PETS 22 are then fabricated by powder bed fusion in accordance with the selected insulation layer geometry, PETS geometry, and thermal inputs. For example, a first PETS 22 is fabricated for ROI1, a second PETS 22 for ROI2, and so on and so forth for each ROI. As the thermal profile of the PETS 22 replicates its corresponding ROI, the PETS 22 and the corresponding ROI are metallurgically equivalent. Moreover, since the ROIs differ in thermal profile from each other, the thermal profiles of each PETS 22, and thus also the selected geometry of the insulation layer 32/132/232 differs from one PETS 22 to the next. After the build, the PETS 22 is removed from the reference plane 28 (e.g., by cutting) and test pieces 26 are then formed from the PETS 22. The test pieces 26 are tested to determine whether the properties of the PETS 22, and thus the properties of the corresponding ROI, meet part qualification standards.

The PETS 22 herein provides a methodology for testing properties that are representative of a localized region of an additively manufactured article. Moreover, the methodology provides a model-based approach that incorporates physics-based analytics at the micro- and meso- scales for local processing paths and associated processing parameters to enable rapid, affordable, and effective qualification and certification of articles. The methodology herein is also a stark contrast to methodologies that are based on test specimens that are manufactured alongside of, and at the same time of, the article, without consideration of localized process thermal history in the article. Such a methodology assumes that all properties of the test specimens are the same everywhere in the part volume and are equal to the properties of separately printed specimens. This, however, is a poor assumption, as there are varying thermal histories between different features and regions in an additively manufactured article. These thermal histories are not emulated in a test specimen built alongside an article, and such test specimens therefore do not truly represent any particular localized region or feature of the article as the PETS 22 herein does.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A method (34) comprising:
identifying at least one region-of-interest (ROI) of an article (36) that is to be additively manufactured by powder bed fusion;
determining a thermal profile of the at least one ROI, where the thermal profile includes at least a maximum temperature and a cooling rate;
determining a geometry of an insulation layer (32; 132; 232) upon which at least one process-equivalent test specimen (PETS) (22) is to be additively manufactured by powder bed fusion such that a thermal profile of the at least one PETS (22) replicates the thermal profile of the at least one ROI; and
fabricating the at least one PETS (22) in accordance with the thermal profile of the at least one PETS (22) by using the determined geometry of the insulation layer (32; 132; 232) such that the at least one PETS (22) and the at least one ROI are metallurgically equivalent.

2. The method as recited in claim 1, wherein the geometry of the insulation layer (32; 132) includes vertical columns (44; 144), optionally wherein the vertical columns (44; 144) are of uniform cross-section or taper in cross-section.

3. The method as recited in claim 2, wherein the vertical columns (44) each have a thickness, a width, and a height such that the height is greater than the thickness and greater than the width.

4. The method as recited in claim 1, wherein the insulation layer (232) is a layer (244) of unfused powder particles.

5. The method as recited in any preceding claim, wherein the determining of the geometry includes simulating a build process of the at least one PETS (22) and adjusting the geometry of the insulation layer (32; 132; 232) such that the thermal profile of the at least one PETS (22) replicates the thermal profile of the at least one ROI.

6. The method as recited in any preceding claim, further comprising determining a thermal input such that the thermal profile of the at least one PETS (22) replicates the thermal profile of the at least one ROI, the thermal input selected from the group consisting of a build orientation, a laser power, a scan speed, residence time, and combinations thereof, and fabricating the PETS (22) in accordance with the thermal input.

7. The method as recited in any preceding claim, further comprising determining a geometry of the at least one PETS (22) such that the thermal profile of the at least one PETS (22) replicates the thermal profile of the at least one ROI.

8. The method as recited in any preceding claim, wherein the at least one ROI includes first and second ROIs, the at least one PETS (22) includes first and second PETS (22) corresponding, respectively, to the first and second ROls, and the thermal profile of the first ROI differs from the thermal profile of the second ROI such that the geometry of the insulation layer (32; 132; 232) of the first PETS (22) is different than the geometry of the insulation layer (32; 132; 232) of the second PETS (22).

9. The method as recited in any preceding claim, wherein the at least one ROI is selected from the group consisting of an overhang, an edge, and a bridge.

10. An additive manufacturing build (10) of a process-equivalent test specimen (22), comprising:
an additively manufactured process-equivalent test specimen (PETS) (22) on a reference plane (28);
a build plate (30) vertically spaced from the reference plane (28); and
an insulation layer (32; 132; 232) on the build plate (30) supporting the reference plane (28) and the PETS (22), the insulation layer (32; 132; 232) having a geometry such that a thermal profile of the PETS (22) replicates a thermal profile of a region of interest of an article (36) associated with the PETS (22).

11. The additive manufacturing build as recited in claim 10, wherein the geometry of the insulation layer (32; 132; 232) includes vertical columns (44; 144) extending from the build plate (30) to the reference plane (28).

12. The additive manufacturing build as recited in claim 11, wherein the vertical columns (44) are of uniform cross-section.

13. The additive manufacturing build as recited in claim 11, wherein the vertical columns taper (144) in cross-section.

14. The additive manufacturing build as recited in claim 11, 12 or 13, wherein the vertical columns (44) each have a thickness, a width, and a height such that the height is greater than the thickness and greater than the width.

15. The additive manufacturing build as recited in claim 10, wherein the insulation layer (232) is a layer (244) of unfused powder particles.
